(19) Europäisches Patentamt
European Patent Office
Office européen des brevets

(11) **EP 1 013 137 B1**

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(21) Anmeldenummer: **98946448.2**

(22) Anmeldetag: **08.09.1998**

(51) Int Cl.$^7$: **H04Q 11/04**

(86) Internationale Anmeldenummer:
**PCT/EP1998/005752**

(87) Internationale Veröffentlichungsnummer:
**WO 1999/013678 (18.03.1999 Gazette 1999/11)**

(54) **VERFAHREN UND ANORDNUNG ZUM AUTOMATISCHEN KONFIGURIEREN EINER TEILNEHMEREINRICHTUNG MIT NETZSCHNITTSTELLENEINHEIT**

METHOD AND DEVICE FOR AUTOMATIC CONFIGURATION OF A SUBSCRIBER'S INSTALLATION WITH A NETWORK INTERFACE UNIT

PROCEDE ET DISPOSITIF DE CONFIGURATION AUTOMATIQUE D'UN EQUIPEMENT D'ABONNE A UNITE D'INTERFACE DE RESEAU

(84) Benannte Vertragsstaaten:
**DE ES GB IT**

(30) Priorität: **08.09.1997 EP 97115554**

(43) Veröffentlichungstag der Anmeldung:
**28.06.2000 Patentblatt 2000/26**

(73) Patentinhaber: **SIEMENS AKTIENGESELLSCHAFT 80333 München (DE)**

(72) Erfinder: **VON DER STRATEN, Gernot D-82327 Tutzing (DE)**

(56) Entgegenhaltungen:
EP-A- 0 039 191          DE-C- 4 343 982
US-A- 5 305 318          US-A- 5 317 415

• HANRATTY J M ET AL: "AN EVALUATION OF ISDN VIA ACTS IN SUPPORT OF ARMY WIDE AREA INFORMATION SERVICES" MILCOM '93, "COMMUNICATIONS ON THE MOVE", Bd. 3 OF 3, 11. - 14. Oktober 1993, Seiten 988-992, XP000410900 BEDFORD, MA

**Beschreibung**

Die Erfindung betrifft ein Verfahren zum Konfigurieren einer Teilnehmereinrichtung mit einer Netzschnittstelleneinheit zum Anpassen der Teilnehmereinrichtung an eine Anschlußeinheit eines Digitalnetzes, wenn die Datenrate der Anschlußeinheit abhängig von den tatsächlichen Übertragungsbedingungen adaptiv einstellbar ist.

Moderne Telekommunikationsnetze verfügen im Teilnehmeranschlußbereich über digitale Anschlußleitungsnetze, die eine oder mehrere Ortsvermittlungsstellen mit Hilfe von Anschlußeinheiten über Teilnehmeranschlußleitungen mit Teilnehmereinrichtungen verbinden. Solche Teilnehmereinrichtungen sind aus der Sicht des Anschlußleitungsnetzes Teilnehmerendeinrichtungen, können jedoch teilnehmerseitig beispielsweise wie eine Vermittlungsanlage oder ein Multiplexer, jeweils mit mehreren unterschiedlichen Endgeräten oder Endgeräteapplikationen realisiert sein. Solche Endgeräteanwendungen können beispielsweise Audiotelefonie, Bildtelefonie, Datennetzanwendungen oder Internetanwendungen sein. Es kann sich beispielsweise auch um eine sogenannte SET-TOP-BOX zum Umsetzen digitaler Bild- und Toninformation handeln, die entweder unmittelbar oder über eine Vermittlungseinrichtung an ein Anschlußleitungsnetz angeschlossen sein kann. Zwischen Teilnehmereinrichtung und Anschlußleitungsnetz können bedarfsweise sowohl Vermittlungsdaten als auch Paketdaten übermittelt werden. Der Übertragungsbandbreitebedarf, also die zu übertragende Bitrate zwischen der zugeordneten Anschlußeinheit des Anschlußleitungsnetzes und der Netzschnittstelleneinheit der Teilnehmereinrichtung hängt hierbei vom Bandbreitenbedarf der aktuell aktiven Endgeräteanwendungen ab, insbesondere von der Art dieser Anwendungen und der Anzahl der gleichzeitig aktiven Anwendungen.

Anschlußleitungsnetze wurden ursprünglich zur Übertragung niederfrequenter Informationssignale wie beispielsweise beim analogen Fernsprechen oder bei der Verwendung von Schmalbanddiensten konzipiert. Die im Anschlußleitungsnetz auf der Teilnehmerseite übertragene Bitrate ist hierbei beispielsweise für Schmalband-ISDN 2 x 64 kBit/s für 2 B-Kanäle (Nutzkanäle)zuzüglich 16 kBit/s für einen D-Kanal (Steuerkanal) derart festgelegt, daß die längsten vorkommenden Anschlußleitungen noch genutzt werden können. Damit bleibt aber ein großer Teil der maximal zuverlässig übertragbaren Bitrate, d.h. der maximalen Bandbreite im Anschlußleitungsnetzbereich mit kürzeren Anschlußleitungen ungenutzt. Das die Reichweite der Digitalsignalübertragung begrenzende Dämpfungsmaß für symmetrische Doppeladern von Kupferanschlußleitungen nimmt nämlich mit der Leitungslänge zu. Generell gilt, je kürzer die Länge einer Teilnehmeranschlußleitung um so höher kann die darüber zu übertragende Bitrate sein. Für Schmalbanddienste konzipierte Anschlußleitungsnetz eignen sich folglich auch für die Übertragung breitbandigerer Dienste. So haben sich in den letzten Jahren Verfahren durchgesetzt, mit denen die vorhandenen Kupferleitungen im Anschlußleitungsnetz für die Übertragung von digitalen Informationssignalen genutzt werden können. Hierzu zählen beispielsweise das sogenannte ADSL- Verfahren (vom englischsprachigen Ausdruck "Asymmetrical Digital Subscriber Line" für "assymetrische digitale Teilnehmeranschlußleitung") und das sogenannte HDSL-Verfahren (vom englischsprachigen Ausdruck "High bit rate Digital Subscriber Line" für "digitale Teilnehmeranschlußleitung für hohe Bitrate").

Die DE 43 43 982 beschreibt ein Anschlußleitungsnetz mit Teilnehmeranschlußleitungen zur Übertragung von digitalen Informationssignalen, in dem von einer Ortsvermittlungsstelle Bitmuster über eine Teilnehmeranschlußleitung gesandt werden und die beim Teilnehmer gespiegelt und wieder zurückgesandten Bitmuster ausgewertet werden, um die maximal mögliche Bitrate pro Übertragungsleitung festzulegen. In der Vermittlungsstelle erfolgt dann die Auswertung der erhaltenen Bitmuster. In Abhängigkeit der Ergebnisse wird dann die maximal mögliche Bitrate festgelegt.

Als Verfahren zur teilnehmerseitigen Informationsübertragung in solchen Anschlußleitungsnetzen ist aus dem Artikel von M.N. Huber und P.J. Kühn, Modelling of a Multi-Queue Polling System with Arbitrary Server Interrupts for the Idle-Slot-Concatenation Packet Switching Principle in a Hybrid CS/PS Node; Proceedings of the 12th International Teletraffic Congress, Torino, 1988 bekannt, einen Informationstransportrahmen vorzusehen, der in gleich große Zeitschlitze aufgeteilt ist. Jeder dieser Zeitschlitze wird entweder mit Vermittlungssystem-Daten (CS-Daten vom englischsprachigen Ausdruck Circuit Switching) oder mit Paketdaten (PS-Daten vom englischsprachigen Ausdruck Packet Switching) belegt, wobei alle nicht mit Vermittlungssystem-Daten belegten Zeitschlitze zu einem.verbleibenden Paketdaten-Transportkanal zusammengefaßt werden (Idle Slot Concatenation). Der Verkehrstyp, von dem der verbleibenden Paketdaten-Transportkanal belegt wird, z.B. ATM oder LAN/Ethernet, ist durch die Anschlußkonfiguration, insbesondere durch das von der teilnehmerseitigen Protokollauswerteeinrichtung bearbeitbare Paketdaten-Protokoll festgelegt.

Der Erfindung liegt die Aufgabe zugrunde, anzugeben, wie eine Teilnehmereinrichtung zur flexibleren Nutzung von Anschlußleitungsnetzen zu konfigurieren ist.

Diese Aufgabe löst die Erfindung durch ein Verfahren mit den Merkmalen des Anspruchs 1 und durch eine Teilnehmereinrichtung mit den Merkmalen des Anspruchs 10.

Ein erfindungsgemäßes Verfahren dient zum automatischen Konfigurieren einer Teilnehmereinrichtung, die eine Netzschnittstelleneinheit hat zum Anpassen der Teilnehmereinrichtung an eine Anschlußeinheit eines Digitalnetzes, wobei die Datenrate dieser Netzschnittstelleneinheit abhängig von den tatsächlichen Übertragungsbedingungen adaptiv einstellbar ist. Ein solches Verfahren hat die Verfahrensschritte:

Erfassen der aktuellen ‚maximal möglichen Datenrate zwischen Netzschnittstelleneinheit und Anschlußeinheit bzw. einer anderen Einheit des Anschlußleitunsnetzes mit Hilfe eines Meldungsaustauschs zwischen Netzschnittstelleneinheit und Anschlußeinheit;

Vergleichen der erfaßten aktuellen, maximal möglichen Datenrate mit einem in der Teilnehmereinrichtung gespeicherten Wert einer vormals aktuellen, maximal möglichen Datenrate; Speichern der erfaßten aktuellen, maximal möglichen Datenrate in der Teilnehmereinrichtung, falls dieser Vergleich eine Abweichung ergibt;

Vergleichen der erfaßten aktuellen, maximal möglichen Datenrate mit dem Datenratenbedarf derzeit bestehender Verbindungen von Endgeräteapplikationen der Teilnehmereinrichtung; und

Konfigurieren der erfaßten aktuellen, maximal möglichen Datenrate als maximal zulässige Datenrate der Netzschnittstelleneinheit, falls der Datenratenbedarf derzeit bestehender Verbindungen die erfaßte aktuelle, maximal mögliche Datenrate nicht überschreitet.

Der Wert der vormals aktuellen, maximal möglichen Datenrate ist hierbei der Wert der beim Erfassen der aktuellen ‚maximal möglichen Datenrate zwischen Netzschnittstelleneinheit bzw. Anschlußeinheit und der Vermittlungseinrichtung Ve bzw, einem Konzentrator im Anschlußleitungsnetz AN tatsächlich unterstützten Datenrate. Dieser Wert kann nach oben beschränkt sein durch einen administrativ eingestellten Grenzwert, falls beispielsweise der Teilnehmer vom Netzbetreiber eine geringere Datenrate bezieht, als technisch möglich wäre. Er kann aber auch durch technische Übertragungsparameter nach oben begrenzt sein. Falls die maximal mögliche Datenrate durch einen administrativ eingestellten Grenzwert begrenzt ist, kann selbstverständlich eine zu unterstützende maximale Datenrate diesen Grenzwert unabhängig von den physikalischen Bedingungen nicht überschreiten.

Das beschriebene erfindungsgemäße Verfahren überläßt es höheren Schichten, z.B. der Anwendungsschicht, bestehende Verbindungen auszulösen oder auch dann aufrechtzuerhalten, wenn die Übertragungsqualität, z.B. durch temporäre Störungen, eingeschränkt ist und eigentlich eine Reduktion der Übertragungsbandbreite erfordern würde. Trotzdem ist sichergestellt, daß die Übertragungsqualität gewährleistet wird, wenn die Bandbreite bestehender Verbindungen die geringere erfaßte aktuelle, maximal mögliche Datenrate nicht mehr überschreitet.

Eine Weiterbildung eines solchen Verfahrens zum automatischen Konfigurieren einer Teilnehmereinrichtung sieht zusätzlich vor, daß der Datenratenbedarf derzeit bestehender Verbindungen geprüft wird, falls dieser Datenratenbedarf die erfaßte aktuelle maximal mögliche Datenrate überschreitet, und daß die erfaßte aktuelle maximal mögliche Datenrate als maximal zulässige Datenrate der Netzschnittstelleneinheit konfiguriert wird, wenn dieser Datenratenbedarf die erfaßte aktuelle maximal mögliche Datenrate nicht mehr überschreitet.

Dadurch wird sichergestellt, daß die erforderliche Übertragungsqualität gewährleistet wird, sobald die Bandbreite bestehender Verbindungen die geringere erfaßte aktuelle, maximal mögliche Datenrate nicht mehr überschreitet.

Eine besonders günstige Weiterbildung eines Verfahrens zum erfindungsgemäßen automatischen Konfigurieren einer Teilnehmereinrichtung enthält den zusätzlichen Verfahrensschritt, daß falls der Datenratenbedarf derzeit bestehender Verbindungen die erfaßte aktuelle maximal mögliche Datenrate überschreitet, eine Meldung an mindestens eine Endgeräteapplikationen der Teilnehmereinrichtung, für die derzeit bestehende Verbindungen aufgebaut sind, abgegeben wird, um darauf hinzuweisen, daß die Übertragungsqualität nicht gewährleistet ist. In diesem Fall kann in der Anwendungsschicht oder einer höheren Schicht entschieden werden, ob die Verbindungen auch mit höherer Bitfehlerrate aufrechterhalten werden sollen, oder ob eine oder mehrere Verbindungen ausgelöst werden sollen.

In einer Weiterbildung eines erfindungsgemäßen Verfahrens wird, falls die erfaßte aktuelle maximal mögliche Datenrate als maximal zulässige Datenrate der Netzschnittstelleneinheit konfiguriert wird, eine Meldung mit der neuen maximal zulässige Datenrate der Netzschnittstelleneinheit an die Anschlußeinheit abgegeben. Dadurch liegt die in der Teilnehmereinrichtung aktuell eingestellte maximal zulässige Datenrate der Netzschnittstelleneinheit auch in der Anschlußeinheit vor und kann entsprechend unterstützt werden.

Eine andere günstige Weiterbildung eines erfindungsgemäßen Verfahrens zum automatischen Konfigurieren einer Teilnehmereinrichtung enthält den zusätzlichen Verfahrensschritt, die erfaßte aktuelle, maximal mögliche Datenrate mit einem in der Teilnehmereinrichtung gespeicherten Wert der von der Anschlußeinheit unterstützten maximalen Datenrate zu vergleichen und den Wert der erfaßten aktuellen, maximal möglichen Datenrate durch den Wert der vom Anschlußleitungsnetz AN unterstützten maximalen Datenrate zu ersetzen, falls dieser kleiner ist als der Wert der erfaßten aktuellen, maximal möglichen Datenrate. Diese Ausgestaltungsform eines erfindungsgemäßen Verfahrens berücksichtigt unter anderem den Fall, daß die physikalischen Voraussetzungen eine höhere Datenrate erlauben würden, als von der Anschlußeinheit eines Netzbetreibers unterstützt wird. Hierbei ist es unerheblich, ob die Beschränkung der maximal unterstützten Datenrate technisch oder administrativ bedingt ist. Eine technisch bedingte Beschränkung kann in einem solchen Fall zum Beispiel die Beschränkung auf einen Anschluß gemäß PCM30-Standard und somit auf 30 Kanäle mit jeweils 64 kBit Übertragungsrate bzw. auf ca. 2 MHz Bandbreite sein. Eine administrative Beschränkung kann bei installiertem Anschluß gemäß PCM30-Standard dadurch bedingt sein, daß der Teilnehmer nur einen oder einige Anschlüsse, jeweils mit beispielsweise zwei Nutzkanälen von je 64 kBit Datenrate und einem D-Kanal von 16 kBit Datenrate gemietet hat und daher der Netzbetreiber im Anschlußleitungsnetz auch nur die entsprechend eingeschränkte Datenrate unterstützt.

Eine Möglichkeit, in einem erfindungsgemäßen Verfahren die aktuelle ,maximal mögliche Datenrate zwischen Netzschnittstelleneinheit und Anschlußeinheit zu erfassen ist, die Übertragungseigenschaften zwischen Netzschnittstelleneinheit bzw. Anschlußeinheit und dem Anschlußleitungsnetz Ve, AN mit Hilfe eines Informationsaustauschs zwischen diesen Einheiten anhand der Fehlerrate zu messen. Daraufhin kann dann die Anschlußeinheit in Form einer Meldung, z.B. Capacity_Modification_Request, die aktuell gemessene maximale Übertragungsrate als Parameter zur Netzschnittstelleneinheit übermitteln.

Das Erfassen der aktuellen ,maximal möglichen Datenrate zwischen Netzschnittstelleneinheit und Anschlußeinheit kann bei einem erfindungsgemäßen Verfahren zum automatischen Konfigurieren einer Teilnehmereinrichtung beispielsweise durch das Übermitteln einer Anfragemeldung wie Max_Capacity_Request von der Netzschnittstelleneinheit zur Anschlußeinheit veranlaßt werden. Daraufhin kann dann die Anschlußeinheit, eventuell unter Einbeziehen der Netzschnittstelleneinheit, ein Verfahren zum Ermitteln der aktuellen ,maximal möglichen Datenrate ausführen. Das Ergebnis kann dann der Netzschnittstelleneinheit übermittelt werden und somit in dieser erfaßt werden. Demnach ist in einer derartigen Ausgestaltungsform eines erfindungsgemäßen Verfahrens die Anschlußeinheit für das ermitteln der maximal möglichen Datenrate zuständig, sodaß die entsprechende Prozeßsteuerung für alle an eine Anschlußeinheit angeschlossenen Netzschnittstelleneinheiten verwendet werden kann. Trotzdem kann jede Netzschnittstelleneinheit, beispielsweise abhängig von den gerade vorgesehenen oder den üblichen Anwendungen, festlegen, wann die maximal mögliche Datenrate aktualisiert werden soll.

Wenn zwischen Netzschnittstelleneinheit und Anschlußeinheit ein Übertragungssystem mit mehreren Nutzkanälen vorgesehen ist, entsprechen in einer Ausgestaltungsform eines erfindungsgemäßen Verfahrens die Werte der Datenraten jeweils einem Vielfachen der Datenrate eines solchen Nutzkanals.

Als Anordnung zur Realisierung eines erfindungsgemäßen Verfahrens ist eine Teilnehmereinrichtung vorgesehen mit Datenverarbeitungssystem einschließlich einer Verarbeitungseinheit, einer Speichereinheit und einem Systembus, um eine Endgeräteapplikation zu realisieren, und mit einer Netzschnittstelleneinheit (NIU) zum Anpassen des Systembusses an eine Anschlußeinheit (AFRA) eines Digitalnetzes, deren Datenrate abhängig von den tatsächlichen Übertragungsbedingungen adaptiv einstellbar ist. Die Teilnehmereinrichtung hat Mittel zum Erfassen der aktuellen, maximal möglichen Datenrate zwischen Netzschnittstelleneinheit und Digitalnetzanschlußeinheit, Mittel zum Speichern eines Wertes der maximal möglichen Datenrate, Mittel zum Vergleichen des gespeicherten Wertes der maximal möglichen Datenrate mit dem Wert der erfaßten aktuellen, maximal möglichen Datenrate, Mittel zum Konfigurieren einer maximal zulässigen Datenrate der Netzschnittstelleneinheit und Mittel zum Abweisen eines Verbindungsaufbauwunsches der Endgeräteapplikation, falls der Datenratenbedarf dieser aufzubauenden Verbindung die maximal zulässige Datenrate überschreitet.

Mittel zum Speichern eines Wertes der maximal möglichen Datenrate ist hierbei vorzugsweise eine Halbleiterspeicheranordnung, es kann aber auch eine Speichereinrichtung mit magnetischem Aufzeichnungsträger oder mit optischem Speichermedium sein. Die Mittel zum Vergleichen des gespeicherten Wertes der maximal möglichen Datenrate mit dem Wert der erfaßten aktuellen, maximal möglichen Datenrate, die Mittel zum Konfigurieren einer maximal zulässigen Datenrate der Netzschnittstelleneinheit und die Mittel zum Abweisen eines Verbindungsaufbauwunsches der Endgeräteapplikation sind vorzugsweise durch eine Prozessoranordnung mit entspechenden Programmprozeduren realisiert.

Ein erfindungsgemäßes Verfahren sowie eine erfindungsgemäße Anordnung ermöglichen es Applikationen in einer Teilnehmereinrichtung, d.h. einem Endsystem wie zum Beispiel einem Personal Computer, einer Set Top Box oder einer Workstation, ein Verfahren zur adaptiven Einstellung der Datenrate auf einer Zweidrahtleitung durch ein Kommunikationsprotokoll zwischen einer Netzschnittstelleneinheit (Network Interface Unit NIU) der Teilnehmereinrichtung und einer Anschlußeinheit eines Digitalnetzes optimal zu nutzen, ohne daß davon die zugeordnete Vemittlungsstelle des Digitalnetzes betroffen ist. Anschlußeinheit und zugeordnete Vemittlungsstelle des Digitalnetzes können hierbei beispielsweise zu einem Anschlußleitungsnetz des Digitalnetzes gehören.

Nachfolgend wird die Erfindung unter Bezugnahme auf die Figuren an Hand eines Ausführungsbeispiels erläutert.

Figur 1    zeigt in schematischer Blockdarstellung ein Ausführungsbeispiel einer Teilnehmereinheit, angeschlossen an ein Anschlußleitungsnetz;

Figur 2    zeigt in schematischer Blockdarstellung ein Ausführungsbeispiel einer Teilnehmereinheit, getrennt nach Hardware und Software;

Figur 3    zeigt ein Flußdiagramm eines beispielhaften Informationsflusses zwischen einer Netzschnittstelleneinheit einer Teilnehmereinheit und einer Anschlußeinheit eines Anschlußleitungsnetzes; und

Figur 4    zeigt ein Flußdiagramm eines beispielhaften Informationsflusses zwischen einer Applikation einer Teilnehmereinheit, einer Netzschnittstelleneinheit einer Teilnehmereinheit und einer Anschlußeinheit eines Anschlußleitungsnetzes.

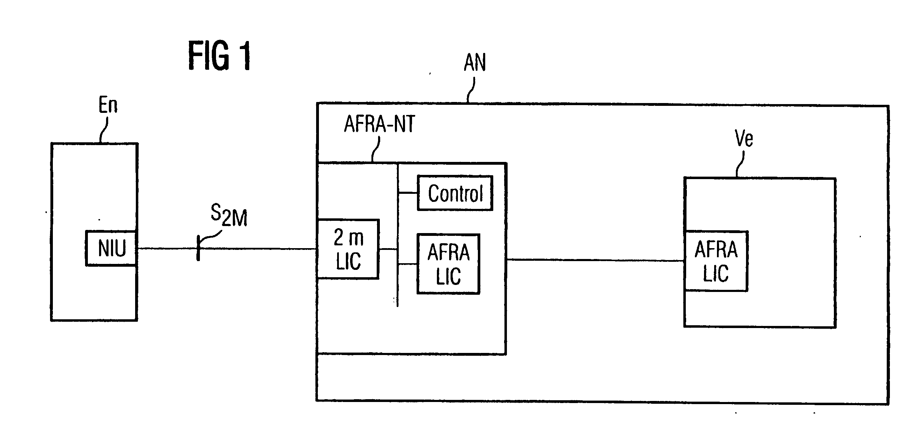

Figur 1 zeigt in schematischer Blockdarstellung eine Teilnehmereinrichtung En mit einer Netzschnittstelleneinheit NIU. Außerdem zeigt Figur 1 ein Anschlußleitungsnetz AN mit einer Anschlußeinheit AFRA-NT und einer Vemittlungsstelle Ve, die über eine Übertragungsstrecke miteinander verbunden sind. Im Ausführungsbeispiel gemäß Figur 1 übernimmt die Netzschnittstelleneinheit NIU der Teilnehmereinrichtung En die Kommunikation mit der Anschlußeinheit AFRA-NT des Anschlußleitungsnetzes AN einerseits und mit nicht dargestellten Applikationen wie z.B. einer Videokonferenzapplikation in der Teilnehmereinrichtung En andererseits.

Das in Figur 1 gezeigte Ausführungsbeispiel geht davon aus, daß zwischen der Anschlußeinheit AFRA-NT und der Netzschnittstelleneinheit NIU der Teilnehmereinrichtung En eine Schnittstelle $S_{2M}$ mit einer Bandbreite von 2 Mbit/s eingesetzt wird. Hierzu enthält die Anschlußeinheit AFRA-NT eine Schnittstelleneinheit 2mLIC. In diesem Fall kann die Hardware der Netzschnittstelleneinheit NIU und der Schnittstelleneinheit 2mLIC der einer ISDN-Schnittstellenkarte mit einer Bandbreite von 2 Mbit/s, also einem Primäranschluß (Primary Access) entsprechen. Zwischen der Netzschnittstelleneinheit NIU und der Anschlußeinheit AFRA-NT wird einer der 64 kbit/s Kanäle des Primäranschlusses zur Kommunikation für Steuer- und Messverfahren verwendet. Dieser Kanal entspricht ggf. einem für Steuerzwecke vorgesehenen Kanal zwischen der Anschlußeinheit AFRA-NT und einer Teilnehmerleitungsschnittstelle AFRA-LIC (Line Interface Card) einer Vemittlungsstelle Ve des Anschlußleitungsnetzes AN.

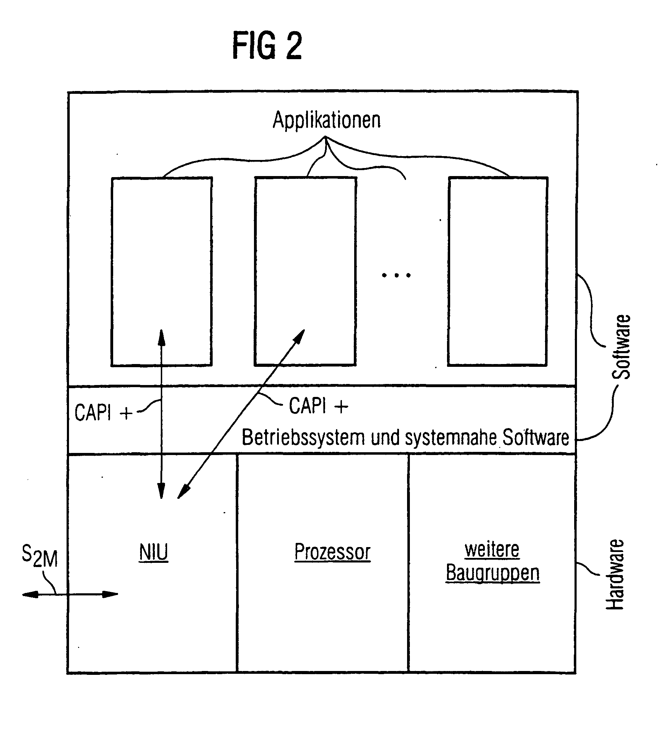

Die Netzschnittstelleneinheit NIU muß sich an den nicht im einzelnen dargestellten Systembus der Teilnehmereinrichtung En anpassen, z.B. eine EISA oder PCIBus-Schnittstelle. Die Schnittstelle zwischen der Netzschnittstelleneinheit NIU und in Figur 2 dargestellten Applikationen im Endsystem kann beispielsweise einer erweiterten CAPI-Schnittstelle CAPI+ entsprechen.

Bei dem Ausführungsbeispiel wird davon ausgegangen, daß bei einem Teilnehmer eine Anschlußeinheit AFRA-NT eines Anschlußleitungsnetzes AN installiert ist, die mit einer Vermittlung Ve des Anschlußleitungsnetzes AN verbunden und getestet ist.

Die Einmessung der Übertragungsstrecke hat im Ausführungsbeispiel eine maximale Anzahl $n_{max}$ B-Kanäle mit

$$2 \leq n_{max} \leq 30$$

ergeben. Hierbei ist $n_{max}$ die Anzahl der B-Kanäle, die maximal auf der Leitung zwischen einer Anschlußleitungsschnittstelle AFRA-LIC der Anschlußeinheit AFRA-NT und einer Anschlußleitungsschnittstelle AFRA-LIC einer Vermittlung Ve des Anschlußleitungsnetzes AN mit einer vorgegebenen maximalen Bitfehlerrate übertragbar sind.

Der Teilnehmer hat für seinen Anschluß die Anzahl $n_{admin}$ B-Kanäle von Betreiber gekauft mit

$$2 \leq n_{admin} \leq n_{max} \, .$$

Der Teilnehmer kann also zu einem Zeitpunkt höchstens die Anzahl $n_{admin}$ B-Kanäle belegen. Der obere Grenzwert $n_{max}$ ist als Begrenzung für $n_{admin}$ in den Teilnehmerdaten der Vermittlung Ve eingetragen.

Der Teilnehmer kann weniger als $n_{admin}$ Kanäle nutzen, falls sich die Übertragungseigenschaften auf der Teilnehmerleitung, und zwar zwischen der Anschlußleitungsschnittstelle AFRA-LIC der Vermittlung Ve des Anschlußleitungsnetzes AN und der Teilnehmereinrichtung En ggf. auch nur vorübergehend so verschlechtern, daß für die aktuelle maximale Übertragungsrate $n_{akt}$ zwischen Anschlußleitungsnetz AN und der Teilnehmereinrichtung En gilt: $n_{akt} \leq n_{admin}$. Dabei ist $n_{akt}$ in diesem Ausführungsbeispiel die Anzahl der B-Kanäle, die aufgrund einer aktuellen Messung der Bitfehlerrate übertragen werden können. Auch für die Anzahl $n_{akt}$, gilt $2 \leq n_{akt} \leq n_{max}$.

Die Anzahl der durch alle Applikationen in der Teilnehmereinrichtung En zu einem Zeitpunkt genutzten B-Kanäle wird im Zusammenhang mit dem Ausführungsbeispiel mit $n_{nutz}$ bezeichnet, wobei für $n_{nutz}$ gilt :

$$0 \leq n_{nutz} \leq n_{admin}.$$

Die Anzahl der von einer Applikation, z.B. einer Videokonferenzapplikation, in der Teilnehmereinrichtung En genutzten B-Kanäle, wird im Zusammenhang mit dem Ausführungsbeispiel mit x bezeichnet, wobei für x gilt:

$$1 \leq x \leq n_{admin}.$$

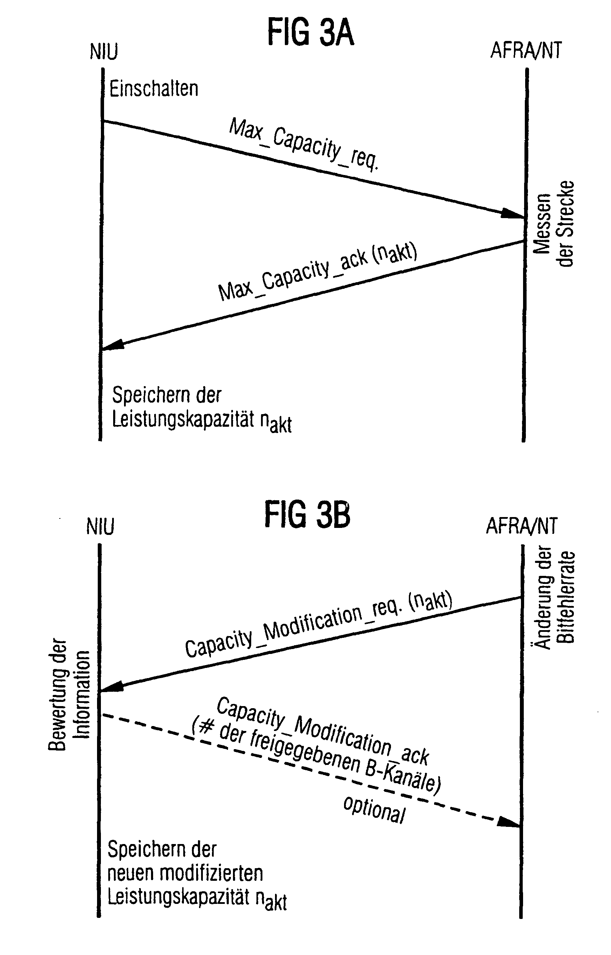

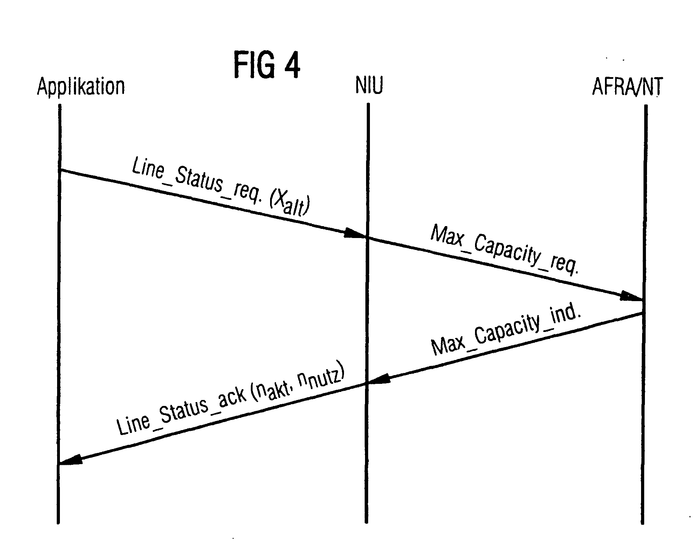

Nachstehend werden Verfahrensabläufe anhand der Figuren 3 und 4 in Form eines Ausführungsbeispiels erläutert:

Wird die Teilnehmereinrichtung En eingeschaltet (siehe Figur 3), so fordert die Netzschnittstelleneinheit NIU mittels der Nachricht Max_Capacity_requ von der Anschlußeinheit AFRA-NT die Zahl $n_{akt}$ der zur Zeit zur Verfügung stehenden B-Kanäle an (siehe Figur 3). Die Anschlußeinheit AFRA-NT und die Anschlußleitungsschnittstelle AFRA-LIC führen daraufhin die Messung der Übertragungsstrecke zwischen der Anschlußeinheit AFRA-NT und der Vermittlungsstelle Ve durch.

Die Anschlußeinheit AFRA-NT beantwortet die Anfrage mit Max_Capacity_ack, die $n_{akt}$ enthält.

Die Netzschnittstelleneinheit NIU speichert dann den Wert $n_{akt}$ und kann Verbindungsaufbauwünsche der Teilnehmereinrichtung En zurückweisen, falls dadurch der Wert $n_{akt}$ überschritten würde. Falls der Wert $n_{akt}$ größer als der Wert $n_{admin}$ sein sollte, weist die Vermittlungsstelle Ve Rufe zurück, die zu einem Überschreiten des Wertes $n_{admin}$ führen würden.

Im laufenden Betrieb stellen die Anschlußeinheit AFRA-NT und die Anschlußleitungsschnittstelle AFRA-LIC durch Routinemessungen der Leitung eine Veränderung der Übertragungseigenschaften fest. Daraufhin stellt die Anschlußeinheit AFRA-NT der Netzschnittstelleneinheit NIU die Meldung Capacity_Modification_requ (siehe Figur 3) zu, die als Parameter die Zahl $n_{akt}$ enthält. Falls der neue Wert $n_{akt}$ größer ist als der in der Netzschnittstelleneinheit NIU gespeicherte Wert, wird der neue Wert für $n_{akt}$ gespeichert und die Netzschnittstelleneinheit NIU antwortet mit Capacity_Modification_ack. Falls der neue Wert für $n_{akt}$ niedriger ist als der alte, prüft die Netzschnittstelleneinheit NIU auch, ob $n_{nutz} > n_{akt}(neu)$ gilt.

Wenn das nicht der Fall ist, antwortet die Netzschnittstelleneinheit NIU mit Capacity_Modification_ack und teilt der Anschlußeinheit AFRA-NT die Nummern der freigegebenen B-Kanäle mit.

Daraufhin reduzieren die Anschlußeinheit AFRA-NT und die Anschlußleitungsschnittstelle AFRA-LIC in der Vermittlungsstelle Ve die Bitrate auf der Anschlußleitung entsprechend.

Falls der neue Wert für $n_{akt}$ kleiner ist als die Zahl $n_{nutz}$ der momentan genutzten B-Kanäle, beantwortet die Netzschnittstelleneinheit NIU die Nachricht Capacity_Modification_request nicht. Statt dessen kann sie Applikationen im Endsystem, sofern diese es zulassen, mittels einer Nachricht Capacity_Modification_Indication mitteilen, daß nicht mehr für alle Kanäle die Dienstgüte garantiert werden kann und die Zahl der B-Kanäle deshalb reduziert werden sollte (siehe auch Figur 4). Es liegt dann in der Verantwortung der Applikationen, angemessen auf diese Informationen zu reagieren.

Werden in diesem Zustand Verbindungen ausgelöst, so baut die Netzschrittstelleneinheit NIU bei Anforderung durch eine Applikation nur dann neue Verbindungen auf, falls $n_{akt}$, durch den neuen Verbindungsaufbau nicht überschritten wird.

Werden Applikationen im Endsystem von der Netzschnittstelleneinheit NIU entweder durch die Nachricht Capacity_Modification_Indication auf eine Reduktion der zur Verfügung stehenden Bitrate aufmerksam gemacht, oder erkennt eine Applikation aufgrund eigener Messungen eine Verschlechterung der Übertragungsstrecke, kann sie mit dem in Figur 4 schematisch dargestellten Verfahren die Zahl $n_{akt}$ und $n_{nutz}$ abfragen. Die Netzschnittstelleneinheit NIU teilt der Applikation in der Nachricht Line_Status_ack die Zahl der für sie aktuell zur Verfügung stehenden B-Kanäle mit. Wenn diese Applikation die Anzahl $x_{alt}$ B-Kanäle belegt, berechnet sich die Zahl $x_{neu}$ aus

$$x_{neu} = \max (n_{akt} - ( n_{nutz} - x_{alt}), 0).$$

Die Applikation hat dann die Möglichkeit, von sich aus die bestehende Verbindung auszulösen und eine neue Verbindung mit ggf. weniger B-Kanälen aufzubauen.

Stellt die Applikation fest, daß sie mehr B-Kanäle benötigt als sie zur Zeit benutzt, veranlaßt sie einen Informationsfluß und Verfahrensablauf gemäß Figur 4.

**Patentansprüche**

1.  Verfahren zum automatischen Konfigurieren einer Teilnehmereinrichtung (En) mit einer Netzschnittstelleneinheit (NIU) zum Anpassen der Teilnehmereinrichtung (En) an eine Anschlußeinheit (AFRA-NT) eines Digitalnetzes (AN), deren Datenrate abhängig von den tatsächlichen Übertragungsbedingungen im Digitalnetz (AN) adaptiv einstellbar ist, mit den Verfahrensschritten:

    Erfassen der aktuellen ,maximal möglichen Datenrate zwischen Netzschnittstelleneinheit (NIU) und Anschlußeinheit (AFRA-NT) mit Hilfe eines Meldungsaustauschs zwischen diesen Einheiten;

    **gekennzeichnet durch** :

    Vergleichen der erfaßten aktuellen, maximal möglichen
    Datenrate mit einem in der Teilnehmereinrichtung (En) gespeicherten Wert einer vormals aktuellen, maximal möglichen Datenrate;
    Speichern der erfaßten aktuellen, maximal möglichen Datenrate in der Teilnehmereinrichtung, falls dieser Vergleich eine Abweichung ergibt;

Vergleichen der erfaßten aktuellen, maximal möglichen Datenrate mit dem Datenratenbedarf derzeit bestehender Verbindungen von Endgeräteapplikationen der Teilnehmereinrichtung; und

Konfigurieren der erfaßten aktuellen, maximal möglichen Datenrate als maximal zulässige Datenrate der Netzschnittstelleneinheit (NIU), falls der Datenratenbedarf derzeit bestehender Verbindungen die erfaßte aktuelle, maximal mögliche Datenrate nicht überschreitet.

2. Verfahren zum automatischen Konfigurieren einer Teilnehmereinrichtung (En) nach Anspruch 1, **gekennzeichnet durch** die zusätzlichen Verfahrensschritte:

falls der Datenratenbedarf derzeit bestehender Verbindungen die erfaßte aktuelle maximal mögliche Datenrate überschreitet, Prüfen des Datenratenbedarfs derzeit bestehender Verbindungen, und wenn dieser die erfaßte aktuelle maximal mögliche Datenrate nicht mehr überschreitet, Konfigurieren der erfaßten aktuellen maximal möglichen Datenrate als maximal zulässige Datenrate der Netzschnittstelleneinheit (NIU).

3. Verfahren zum automatischen Konfigurieren einer Teilnehmereinrichtung (En) nach Anspruch 1 oder 2, ,**gekennzeichnet durch** den zusätzlichen Verfahrensschritt:

falls der Datenratenbedarf derzeit bestehender Verbindungen die erfaßte aktuelle maximal mögliche Datenrate überschreitet, Abgeben einer Meldung an mindestens eine Endgeräteapplikationen der Teilnehmereinrichtung, für die derzeit bestehende Verbindungen aufgebaut sind, mit einem Hinweis, daß die Übertragungsqualität nicht gewährleistet ist.

4. Verfahren zum automatischen Konfigurieren einer Teilnehmereinrichtung (En) nach einem der vorhergehenden Ansprüche, **gekennzeichnet durch** den zusätzlichen Verfahrensschritt:

Abgeben einer Meldung an die Anschlußeinheit (AFRA-NT) mit der neuen maximal zulässige Datenrate der Netzschnittstelleneinheit (NIU), falls die erfaßte aktuelle maximal mögliche Datenrate als maximal zulässige Datenrate der Netzschnittstelleneinheit (NIU) konfiguriert wird.

5. Verfahren zum automatischen Konfigurieren einer Teilnehmereinrichtung (En) nach einem der vorhergehenden Ansprüche, **gekennzeichnet durch** den zusätzlichen Verfahrensschritt:

Vergleichen der erfaßten aktuellen maximal möglichen Datenrate mit einem in der Teilnehmereinrichtung (En) gespeicherten Wert der von der Anschlußeinheit (AFRA-NT) unterstützten maximalen Datenrate; und Ersetzen des Wertes der erfaßten aktuellen maximal möglichen Datenrate **durch** den Wert der von der Anschlußeinheit (AFRA-NT) unterstützten maximalen Datenrate, falls dieser kleiner ist als der Wert der erfaßten aktuellen maximal möglichen Datenrate.

6. Verfahren zum automatischen Konfigurieren einer Teilnehmereinrichtung (En) nach einem der vorhergehenden Ansprüche, **dadurch gekennzeichnet, daß** zum Erfassen der aktuellen ,maximal möglichen Datenrate zwischen Netzschnittstelleneinheit (NIU) und Anschlußeinheit (AFRA-NT) die Netzschnittstelleneinheit (NIU) und die Anschlußeinheit (AFRA-NT) mit Hilfe eines Informationsaustauschs zwischen diesen Einheiten die Übertragungseigenschaften anhand der Fehlerrate messen und die Anschlußeinheit (AFRA-NT) daraufhin in Form einer Meldung (Capacity_Modification_Requ) die aktuell gemessene maximale Übertragungsrate als Parameter zur Netzschnittstelleneinheit (NIU) übermittelt.

7. Verfahren zum automatischen Konfigurieren einer Teilnehmereinrichtung (En) nach einem der vorhergehenden Ansprüche, **dadurch gekennzeichnet, daß** zum Veranlassen des Erfassens der aktuellen , maximal möglichen Datenrate zwischen Netzschnittstelleneinheit (NIU) und Anschlußeinheit (AFRA-NT) die Netzschnittstelleneinheit (NIU) eine Anfragemeldung (Max_Capacity_Requ) zur Anschlußeinheit (AFRA-NT) übermittelt.

8. Verfahren zum automatischen Konfigurieren einer Teilnehmereinrichtung (En) nach einem der vorhergehenden Ansprüche, **dadurch gekennzeichnet, daß** zwischen Netzschnittstelleneinheit (NIU) und Anschlußeinheit ein Übertragungssystem mit mehreren Nutzkanälen vorgesehen ist und daß die Werte der Datenraten jeweils einer Anzahl solcher Nutzkanäle entsprechen.

9. Teilnehmereinrichtung (En) mit Datenverarbeitungssystem einschließlich einer Verarbeitungseinheit, einer Speichereinheit und einem Systembus, um eine Endgeräteapplikation zu realisieren, und mit einer Netzschnittstelleneinheit (NIU) zum Anpassen des Systembusses an eine Anschlußeinheit (AFRA-NT) eines Digitalnetzes, deren Datenrate abhängig von den tatsächlichen Übertragungsbedingungen adaptiv einstellbar ist, wobei die Teilnehmereinrichtung (En) Mittel zum Erfassen der aktuellen, maximal möglichen Datenrate zwischen Netzschnittstelleneinheit (NIU) und Digitalnetzanschlußeinheit (AFRA-NT) hat, Mittel zum Speichern eines Wertes der maximal möglichen Datenrate, **gekennzeichnet durch** Mittel zum Vergleichen des gespeicherten Wertes der maximal möglichen Datenrate mit dem Wert der erfaßten aktuellen, maximal möglichen Datenrate, Mittel zum Konfigurieren einer maximal zulässigen Datenrate der Netzschnittstelleneinheit (NIU) und Mittel zum Abweisen eines Verbindungsaufbauwunsches der Endgeräteapplikation, falls der Datenratenbedarf dieser aufzubauenden Verbindung die maximal zulässige Datenrate überschreitet.

## Claims

1. Method for automatic configuration of subscriber equipment (En) having a network interface unit (NIU) for interfacing the subscriber equipment (En) to an access unit (AFRA-NT) of a digital network (AN), the data rate of this access unit being adaptively adjustable according to the actual transmission conditions in the digital network (AN), having the method steps:

   measuring the current maximum possible data rate between network interface unit (NIU) and access unit (AFRA-NT) with the aid of a message exchange between these units;

   **characterised by**:

   comparing the measured current maximum possible data rate with a value of a previously current maximum possible data rate stored in the subscriber equipment (En);
   storing the measured current maximum possible data rate in the subscriber equipment if this comparison results in a difference;
   comparing the measured current maximum possible data rate with the data rate requirement of connections that currently exist from the terminal device applications of the subscriber equipment; and
   configuring the measured current maximum possible data rate as the maximum permitted data rate of the network interface unit (NIU) if the data rate requirement of connections that currently exist does not exceed the measured current maximum possible data rate.

2. Method for automatic configuration of subscriber equipment (En) according to Claim 1, **characterised by** the additional method steps:

   checking of the data rate requirement if the data rate requirement of connections that currently exist exceeds the measured current maximum possible data rate, and
   configuration of the measured current maximum possible data rate as the maximum permitted data rate of the network interface unit (NIU) when this data rate requirement no longer exceeds the measured current maximum possible data rate.

3. Method for automatic configuration of subscriber equipment (En) according to Claim 1 or 2, **characterised by** the additional method step:

   issuing of a message to at least one terminal device application of the subscriber equipment for which the connections that currently exist are established, with an indication that the transmission quality is not guaranteed, if the data rate requirement of connections that currently exist exceeds the measured current maximum possible data rate.

4. Method for automatic configuration of subscriber equipment (En) according to one of the preceding claims, **characterised by** the additional method step:

   issuing of a message containing the new maximum permitted data rate of the network interface unit (NIU) to the access unit (AFRA-NT), if the measured current maximum possible data rate is configured as the maximum permitted data rate of the network interface unit (NIU)

5. Method for automatic configuration of subscriber equipment (En) according to one of the preceding claims, **characterised by** the additional method step:

   comparing the measured current maximum possible data rate with a value, stored in the subscriber equipment (En), of the maximum data rate supported by the access unit (AFRA-NT); and replacing the value of the measured current maximum possible data rate with the value of the maximum data rate supported by the access unit (AFRA-NT) if this is less than the value of the measured current maximum possible data rate.

6. Method for automatic configuration of subscriber equipment (En) according to one of the preceding claims, **characterised in that** to measure the current maximum possible data rate between network interface unit (NIU) and access unit (AFRA-NT), the network interface unit (NIU) and the access unit (AFRA-NT) measure the transmission properties from the error rate with the aid of an information exchange between these units, and thereupon the access unit (AFRA-NT) transfers the currently measured maximum transmission rate as a parameter to the network interface unit (NIU) in the form of a message (Capacity_Modification_Requ).

7. Method for automatic configuration of subscriber equipment (En) according to one of the preceding claims, **characterised in that** to initiate measurement of the current maximum possible data rate between network interface unit (NIU) and access unit (AFRA-NT), the network interface unit (NIU) transfers a request message such as (Max_Capacity_Requ) to the access unit (AFRA-NT).

8. Method for automatic configuration of subscriber equipment (En) according to one of the preceding claims, **characterised in that** a transmission system having a plurality of user information channels is provided between network interface unit (NIU) and access unit, and that the values of the data rates each correspond to a number of such user information channels.

9. Subscriber equipment (En) having data processing system including a processing unit, a memory unit and a system bus, in order to implement a terminal device application, and having a network interface unit (NIU) for interfacing the system bus to an access unit (AFRA-NT) of a digital network, where the data rate of this access unit can be adjusted adaptively according to the actual transmission conditions, the subscriber equipment (En) having means for measuring the current maximum possible data rate between network interface unit (NIU) and digital network access unit (AFRA-NT), means for storing a value of the maximum possible data rate, **characterised by** means for comparing the stored value of the maximum possible data rate with the value of the measured current maximum possible data rate, means for configuring a maximum permitted data rate of the network interface unit (NIU) and means for rejecting a request from the terminal device application to establish a connection if the data rate requirement of this connection to be established exceeds the maximum permitted data rate.

## Revendications

1. Procédé de configuration automatique d'un dispositif d'abonné (En) comprenant une unité d'interface de réseau (NIU) destinée à adapter le dispositif d'abonné (En) à une unité de raccordement (AFRA-NT) d'un réseau numérique (AN), dont le débit de données est réglable de manière adaptative en fonction des conditions effectives de transmission dans le réseau numérique (AN), comprenant les étapes de procédé :

enregistrement du débit de données momentané maximal possible entre l'unité d'interface de réseau (NIU) et l'unité de raccordement (AFRA-NT) à l'aide d'un échange de messages entre ces unités ;

**caractérisé par**
une comparaison du débit de données momentané maximal possible enregistré avec une valeur mémorisée dans le dispositif d'abonné (En) d'un débit de données momentané maximal possible précédent ;
une mémorisation du débit de données momentané maximal possible enregistré dans le dispositif d'abonné, au cas où une différence résulte de cette comparaison ;
une comparaison du débit de données momentané maximal possible enregistré avec le besoin en débit de données de communications d'applications de terminaux du dispositif d'abonné, existantes pour le moment ; et
une configuration du débit de données momentané maximal possible enregistré comme débit de données maximal admissible de l'unité d'interface de réseau (NIU), au cas où le besoin en débit de données de communications existantes pour le moment ne dépasse pas le débit de données momentané maximal possible enregistré.

2. Procédé de configuration automatique d'un dispositif d'abonné (En) selon la revendication 1, **caractérisé par** les étapes de procédé supplémentaires :

au cas où le besoin en débit de données de communications existantes pour le moment dépasse le débit de données momentané maximal possible enregistré, vérification du besoin en débit de données de communications existantes pour le moment, et lorsque ce besoin ne dépasse plus le débit de données momentané maximal possible enregistré, configuration du débit de données momentané maximal possible enregistré comme débit de données maximal admissible de l'unité d'interface de réseau (NIU).

3. Procédé de configuration automatique d'un dispositif d'abonné (En) selon la revendication 1 ou 2, **caractérisé par** l'étape de procédé supplémentaire :

au cas où le besoin en débit de données de communications existantes pour le moment dépasse le débit de données momentané maximal possible enregistré, émission d'un message à au moins une application de terminal du dispositif d'abonné, pour laquelle des communications existantes pour le moment sont établies, avec une indication que la qualité de transmission n'est pas garantie.

4. Procédé de configuration automatique d'un dispositif d'abonné (En) selon l'une quelconque des revendications précédentes, **caractérisé par** l'étape de procédé supplémentaire :

émission d'un message à l'unité de raccordement (AFRA-NT) avec le nouveau débit de données maximal admissible de l'unité d'interface de réseau (NIU), au cas où le débit de données momentané maximal possible enregistré est configuré comme débit de données maximal admissible de l'unité d'interface de réseau (NIU).

5. Procédé de configuration automatique d'un dispositif d'abonné (En) selon l'une quelconque des revendications précédentes, **caractérisé par** l'étape de procédé supplémentaire :

comparaison du débit de données momentané maximal possible enregistré avec une valeur du débit de données maximal supporté par l'unité de raccordement (AFRA-NT), mémorisée dans le dispositif d'abonné (En); et remplacement de la valeur du débit de données momentané maximal possible enregistré par la valeur du débit de données maximal supporté par l'unité de raccordement (AFRA-NT), au cas où celle-ci est inférieure à la valeur du débit de données momentané maximal possible enregistré.

6. Procédé de configuration automatique d'un dispositif d'abonné (En) selon l'une quelconque des revendications précédentes, **caractérisé en ce que** pour enregistrer le débit de données momentané maximal possible entre l'unité d'interface de réseau (NIU) et l'unité de raccordement (AFRA-NT), l'unité d'interface de réseau (NIU) et l'unité de raccordement (AFRA-NT), à l'aide d'un échange d'informations entre ces unités, mesurent les caractéristiques de transmission au moyen du taux d'erreurs et **en ce que** l'unité de raccordement (AFRA-NT) transmet ensuite le débit de transmission maximal mesuré momentanément comme paramètre à l'unité d'interface de réseau (NIU) sous forme d'un message (Capacity_Modification-Requ).

7. Procédé de configuration automatique d'un dispositif d'abonné (En) selon l'une quelconque des revendications précédentes, **caractérisé en ce que** pour causer l'enregistrement du débit de données momentané maximal possible entre l'unité d'interface de réseau (NIU) et l'unité de raccordement (AFRA-NT), l'unité d'interface de réseau (NIU) transmet un message de demande (Max_Capacity_Requ) à l'unité de raccordement (AFRA-NT).

8. Procédé de configuration automatique d'un dispositif d'abonné (En) selon l'une quelconque des revendications précédentes, **caractérisé en ce qu'**un système de transmission comprenant plusieurs canaux utiles est prévu entre l'unité d'interface de réseau (NIU) et l'unité de raccordement et **en ce que** les valeurs des débits de données correspondent respectivement à un nombre de tels canaux utiles.

9. Dispositif d'abonné (En) comprenant un système de traitement de données, y compris une unité de traitement, une unité de mise en mémoire et un bus système, afin de réaliser une application de terminal, et comprenant une unité d'interface de réseau (NIU) pour adapter le bus système à une unité de raccordement (AFRA-NT) d'un réseau numérique, dont le débit de données est réglable de manière adaptative en fonction des conditions effectives de transmission, le dispositif d'abonné (En) ayant des moyens d'enregistrement du débit de données momentané maximal possible entre l'unité d'interface de réseau (NIU) et l'unité de raccordement (AFRA-NT) au réseau numérique, des moyens pour mémoriser une valeur du débit de données maximal possible,
**caractérisé par**
des moyens pour comparer la valeur mémorisée du débit de données maximal possible avec la valeur du débit de données momentané maximal possible enregistré, des moyens pour configurer un débit de données maximal admissible de l'unité d'interface de réseau (NIU) et des moyens pour refuser un souhait d'établissement de communication de l'application du terminal, au cas où le besoin en débit de données de cette communication à établir dépasse le débit de données maximal admissible.

FIG 1

EP 1 013 137 B1

# FIG 2

Applikationen

CAPI +   CAPI +

Betriebssystem und systemnahe Software

Software

NIU   Prozessor   weitere Baugruppen

S2M

Hardware

## FIG 3A

NIU                    AFRA/NT

Einschalten

Max_Capacity_req.

Messen der Strecke

Max_Capacity_ack ($n_{akt}$)

Speichern der
Leistungskapazität $n_{akt}$

## FIG 3B

NIU                    AFRA/NT

Änderung der Bitfehlerrate

Capacity_Modification_req. ($n_{akt}$)

Bewertung der Information

Capacity_Modification_ack
(# der freigegebenen B-Kanäle)

optional

Speichern der
neuen modifizierten
Leistungskapazität $n_{akt}$

# FIG 4

Applikation            NIU            AFRA/NT

Line_Status_req. ($X_{alt}$)

Max_Capacity_req.

Max_Capacity_ind.

Line_Status_ack ($n_{akt}$, $n_{nutz}$)